# EUROPEAN PATENT APPLICATION

(11) **EP 2 621 120 A1**
(43) Date of publication of application: **31.07.2013**
(21) Application number: 12153096.8
(22) Date of filing: 30.01.2012
(51) Int. Cl.: H04J 14/02

(54) **COMMUNICATION SYSTEM, NODE AND METHOD FOR TRANSMITTING A SIGNAL FROM A TRANSMITTING NODE TO A PLURALITY OF RECEIVING NODES**

(71) Applicant: NTT DoCoMo, Inc., Chiyoda-ku Tokyo 100-6150 (JP)
(72) Inventor: Choi, Changsoon, 80335 München (DE); Wei, Qing, 82178 Puchheim (DE); Biermann, Thorsten, 85764 Oberschleißheim (DE)
(74) Representative: Zinkler, Franz

(57) **Abstract**

A communication system includes a plurality of nodes (200, 202₁-202₇) adapted to provide for communication with one or more devices, and a passive optical network connecting the plurality of nodes (200, 202₁-202₇) and for transmitting optical signals between the plurality of nodes, wherein for transmitting a signal from a transmitting node (200) to a receiving node (202₁-202₇), the transmitting node (200) is adapted to generate an optical signal at a wavelength allocated to the receiving node (202₁-202₇), the optical signal including a signal to be transmitted, and each node (200, 202₁-202₇) having allocated a different wavelength, and wherein the receiving node (202₁-202₇) is adapted to transmit the signal received from the transmitting node (200) via an optical signal having a wavelength allocated to another receiving node that did not receive the signal.

## Description

Embodiments of the invention concern the field of communication systems, for example, mobile communication systems comprising a plurality of base stations serving respective mobile units. More specifically, embodiments of the invention refer to a communication system and a method for allowing a direct communication among respective nodes, like base stations, with reduced latency as well as to a node or base station of such a communication system.

In a communication system a plurality of nodes and a central switching device are coupled via a backhaul access network for exchanging signals between the nodes. However, there may be circumstances that require the exchange of information directly between the respective nodes, for example between respective base stations of a mobile communication system. For mobile communication systems, for example, coordinated multi-point (CoMP) schemes have been discussed in 3GPP (third generation partnership project) due to their potential to improve user data rates by allowing different nodes to participate in the transmission and the reception of user data. Examples of such schemes are discussed by M. Sawahashi, Y. Kishiyama, A. Morimoto, D. Nishikawa and M. Tanno, "Coordinated multipoint transmission/reception techniques for LTE-advanced," IEEE wireless communications, vol. 17, issue 3, pp. 26-34, 2010. CoMP schemes require the exchange of user data as well as the exchange of cell information, for example channel state information (CSI), through mobile backhaul networks so that the achievable performance enhancement strongly depends on the mobile backhaul capability, as is discussed by D. Samardzija and H. Huang, "Determining backhaul bandwidth requirements for networks MIMO," EUSIPCO, Glasgow, Aug. 2009. In many cases, signal and data exchanges for a CoMP transmission are required between neighboring nodes or base stations (eNBs), since adjacent nodes usually yield the most significant influence on interference and received signal power level of mobile users. For such a communication, the X2 interface defines a logical interface between two nodes (eNBs) and is used for exchanges/transmissions to support the CoMP transmission. The X2 interface as defined in the 3GPP standard is not a physical interface, but a logical interface which depends on the specific hardware implementation of the actual physical interface.

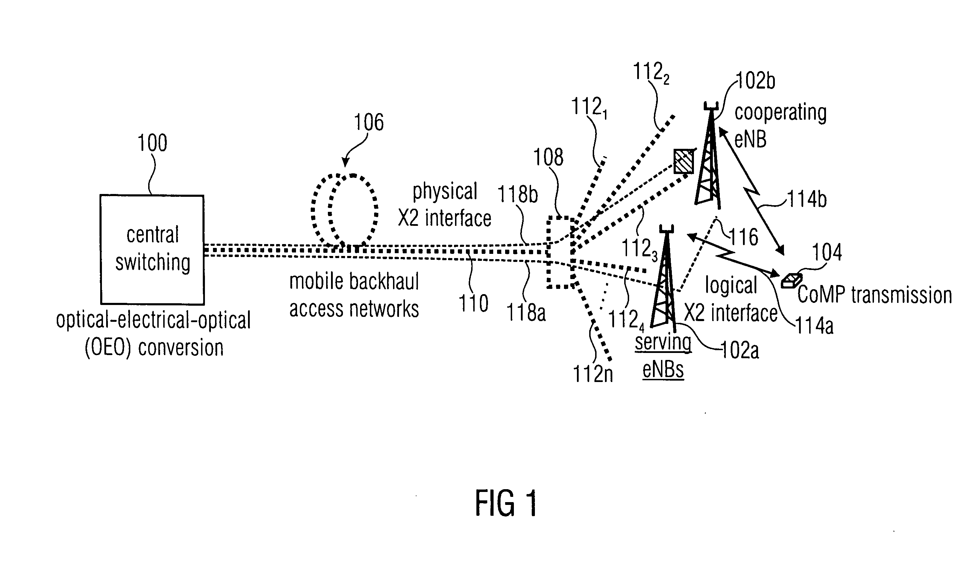

Fig. 1 shows an example of physical and logical X2 interfaces in a mobile backhaul access network. The network comprises a central switching unit 100 and a plurality of base stations 102a, 102b serving respective mobile units, e.g. mobile unit 104. Fig. 1 is just a schematic representation and in reality a communication system will comprise a plurality of mobile units and also a plurality of base stations, i.e. more than two base stations. The central switching unit 100 and the respective base stations 102a and 102b are connected via a mobile backhaul access network 106. The network 106 may be an optical network which comprises an optical multiplexer/demultiplexer device 108 for combining/splitting signals transmitted via the network 106. The network 106 comprises a connection 110 (e.g. an optical fiber) between the central switching unit 100 and the optical multiplexer/demultiplexer device 108 and a plurality of branches 112₁-112ₙ (e.g. optical fibers). The base station 102a is connected to the central switching unit 100 via the connection 110 and the branch 112₄, and the base station 112b is connected to the central switching unit 100 via the connection 110 and the branch 112_{3.} The mobile unit 104 is provided for a CoMP transmission, i.e. the unit 104 communicates with the base station 102a via a first channel 114a and with the base station 102b via a second channel 114b. This communication requires the exchange of information, e.g. the exchange of signals and data, between the neighboring base stations 102a and 102b. The base station 102a is assumed to be the serving base station or serving eNB, and the base station 102b is assumed to be the cooperating base station or cooperating eNB. The exchange of information between the base stations 102a and 102b requires the above-mentioned X2 interface which is a logical interface schematically shown in Fig. 1 at reference sign 116. The logical X2 interface is realized via a physical interface, the physical X2 interface, shown in Fig. 1 at reference signs 118a and 118b. The physical X2 interface has a first component 118a extending between the serving node 102a and the central switching unit 100 and a second component 118b between the central switching unit 100 and the cooperating node 102b. For transmitting data between the nodes 102a and 102b using the logical X2 interface for supporting the CoMP transmission of the mobile unit 104, it is necessary to transmit the actual data from the serving node 102a via the first component 118a of the physical X2 interface to the central switching unit 100 and from the central switching unit 100 back to the cooperating node 102b via the second component 118b of the physical X2 interface 118b.

The physical X2 interface 118a, 118b is realized using the network 106 and the S1 traffic and the X2 traffic share the resources of the network 106. While this may minimize or reduce hardware costs, it results in the problem that the latency and the capacity of the X2 interface may not fulfill the requirements for information exchange in accordance with the CoMP scheme. Implementing the X2 logical interface in a way as depicted in Fig. 1 incorporates a large delay associated with the OEO conversion and the packet processing and due to the long fiber transmission via the links 118a and 118b. In addition, a large processing burden for the central gateway (the central switching unit 100) exists due to the additional OEO conversion. Further, since the X2 interface shares the physical link with the S1-U interface only limited bandwidth is available.

The implementation of the X2 interface as depicted in Fig. 1 has been accepted, since the LTE release 8 (LTE = long-term evolution) only requires that the latency of an X2 interface needs to be in the range of 20 ms maximum with a typical average of 10 ms, which is not a problem in the implementation shown in Fig. 1. The reason for this is that in the practical implementation the X2 communication between respective nodes, the X2 inter-eNB communication was limited, for example, to data forwarded for a handover and for a control plane support for the radio resource management. Such an implementation does not require a low latency in the range of only a few ms as it is required by a CoMP transmission. However, when implementing a CoMP transmission the latency and the limited capacity of the X2 interface realized in a way as shown in Fig. 1 form a bottleneck for CoMP, since, in general, a CoMP transmission requires less than a few ms latency and a true Gbps traffic for the inter-eNBs communication (the communication between the respective base stations). The exact values depend on the actual CoMP technique realized (see e.g. D. Samardzija and H. Huang, "Determining backhaul bandwidth requirements for network MIMO," EUSIPCO, Glasgow, Aug. 2009 and T. Pfeiffer, "Converged heterogeneous optical metro-access networks," ECOC 2010, Turin, September 2010).

Besides the CoMP schemes also other aspects within a mobile communication network benefit from a direct communication link between respective base stations. For example the increased frequency handover in a network having a smaller cell size in accordance with the LTE-advanced standard will require more information to be exchanged through the X2 interface. For this exchange of large amount of information a direct communication link, i.e. a direct X2 physical interface, between respective base stations may also be interesting. Thus, the use of a direct communication link for the X2 link may not only be of interest for a CoMP transmission, but also for transmission of other data between respective, for example, neighboring nodes or base stations.

For addressing the above problems, conventional approaches are known implementing a direct communication link between eNBs for realizing the X2 physical interface instead of implementing the interface using the mobile access network in a way as shown in Fig. 1. One conventional approach would be to provide additional signal lines directly connecting the base stations, e.g. providing additional fiber links between the base stations shown in Fig. 1. However, it is not practical to deploy additional fiber links for the X2 interface due to the associated costs.

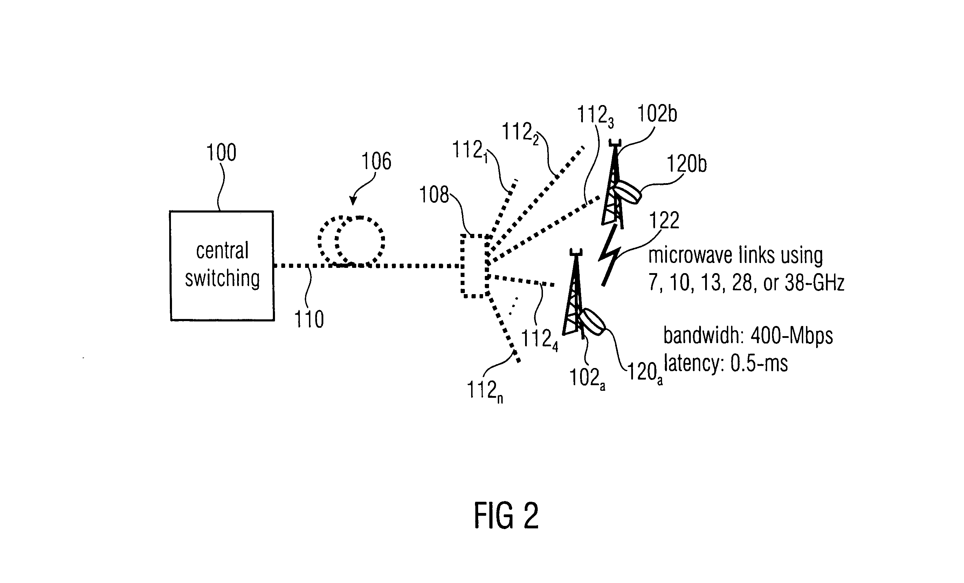

Another conventional approach in shown in Fig. 2 and provides a direct communication link between the respective base stations via a wireless communication link, for example by providing microwave wireless backhaul links. Each of the base stations 102a and 102b is provided with a microwave transceiver 120a, 120b allowing for a wireless communication between the respective base stations 102a and 102b, for example via microwave links operating at 7, 10, 13, 28 or 38 GHz. The direct communication link 122 between the base stations 102a and 102b provides the physical X2 interface allowing for the direct exchange of information in accordance with a logical X2 interface. The communication link 122 allows for a bandwidth of more than 400 Mbps and a latency of about 0.5 ms. However, providing the X2 physical link by installing a microwave/millimeter-wave point-to-point link between two base stations is a very expensive solution as it needs a huge number of additional hardware for the wireless backhauls to cover all nodes. An additional license for the frequency band used is required. Also, the link typically does not offer as much link quality as the backhaul fiber-optic link due to its susceptibility to the environment, e.g. the weather conditions.

Yet another known approach is the use of a TDM-PON (TDM = times division multiplex; PON = passive optical network) having X2 physical links, as described by T. Pfeiffer, "Converged heterogeneous optical metro-access networks," ECOC 2010, Turin, Sept. 2010. A time-division multiplexing passive optical network (TDM-PON) having splitter boxes is used for providing the X2 physical links between the respective nodes. Thus, the drawback of the Fig. 1 network, where the transmission goes through the access gateway is avoided. However, only broadcasting of signals is possible, i.e. no point-to-point communication is possible, as it is required for a direct communication link between respective base stations or nodes (e.g. required by the X2 interface). In addition, using the plurality of splitter boxes increases the costs and reduces the SNR (signal-to-noise ratio), which is a problem with regard to the transmission in the Gbps range. In addition, due to the splitting ratio the loss of a large amount of signal-to-noise ratio cannot be avoided thereby limiting the data rate in the X2 interface so that the TDM-PON cannot support more that 1-Gbps bandwidth per node. Further, a plurality of splitters is required to cover all optical network units in one passive optical network system as well as a careful signaling to avoid collisions between different X2 communications.

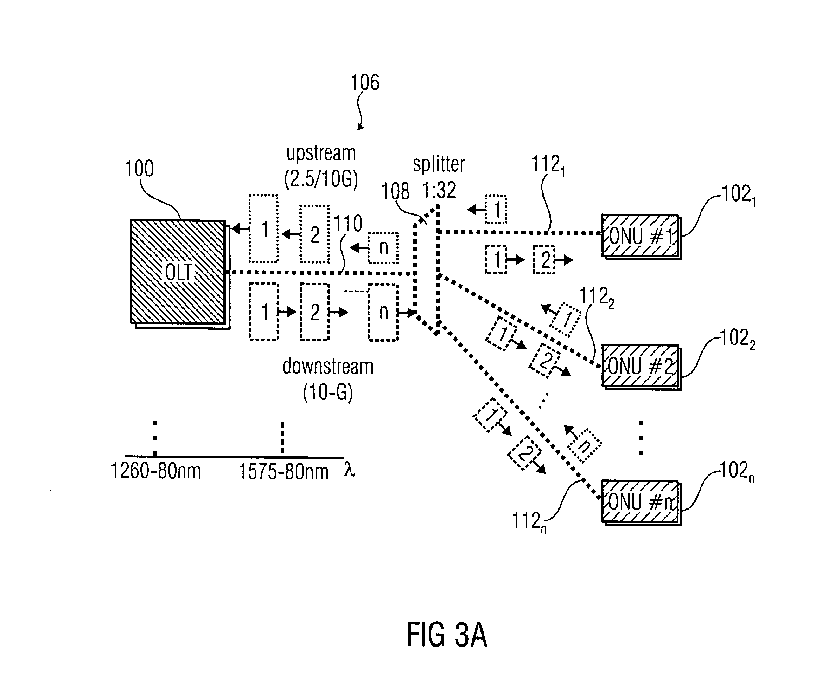

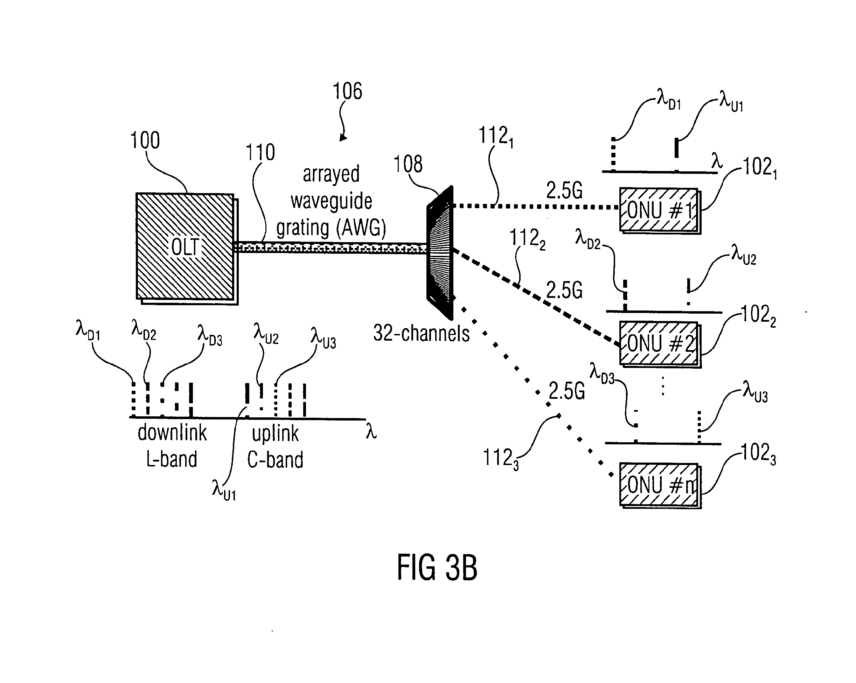

On the basis of Fig. 3, the differences between a TDM-PON and a WDM-PON are discussed. Fig. 3(a) shows a schematic representation of a time division multiplexing passive optical network (TDM-PON). The TDM-PON comprises the central switching unit 100 (OLT = optical line terminal) and the splitter 108 coupled to the OLT 100 via the connection 110, which is a fiber optic connection. The splitter 108 is further connected to a plurality base stations (ONU = optical network unit) 102₁ to 102ₙ. Each of the optical network units 102₁ to 102ₙ is connected to the splitter 108 via a respective branch connection 112₁ to 112ₙ formed of respective optical fibers. The splitter 108 may be a 1:32 splitter, meaning that 32 different optical network units 102₁ to 102ₙ may be served, i.e. n=32. The TDM-PON operates in a wavelength range of 1260-1280 nm for the uplink or upstream connection, i.e. for transmitting data from one or more of the optical network units 102₁ to 102ₙ to the optical line terminal 100. For the downstream or downlink transmission from the unit 100 to the respective optical network units 102₁ to 102ₙ a wavelength between 1575 and 1580 nm is used. In accordance with the time division multiplexing approach, information packages are distributed in the upstream and downstream direction as depicted in Fig. 3 (a).

Fig. 3(b) shows a schematic representation of a wavelength division multiplexing passive optical network (WDM-PON). The WDM-PON comprises the optical line terminal 100 and the plurality of optical network units 102₁ to 102₃. The splitter 108 comprises an arrayed waveguide grating providing 32 channels so that 32 optical network units may be served by the PON. Also, respective fiber connections 110 and 112₁ to 112₃ between the optical line terminal 100 and the plurality of optical network units 102₁ to 102₃ are shown. Each of the optical network units or base stations 102₁ to 102₃ has allocated a first wavelength λ_{D1} to λ_{D3} for the downlink connection. The first wavelengths are in the L-band so that signals transmitted from the optical line terminal 100 towards the respective optical network units 102₁ to 102₃ are transmitted on one of the first or download wavelengths. A signal is automatically directed towards the desired optical network unit via the arrayed waveguide grating 108. In addition, each of the optical networks units 102₁ to 102₃ comprises an uplink wavelength λ_{U1} to λ_{U3} (in the C-band) used for sending data from a respective optical network unit 102₁ to 102₃ to the central switching unit 100.

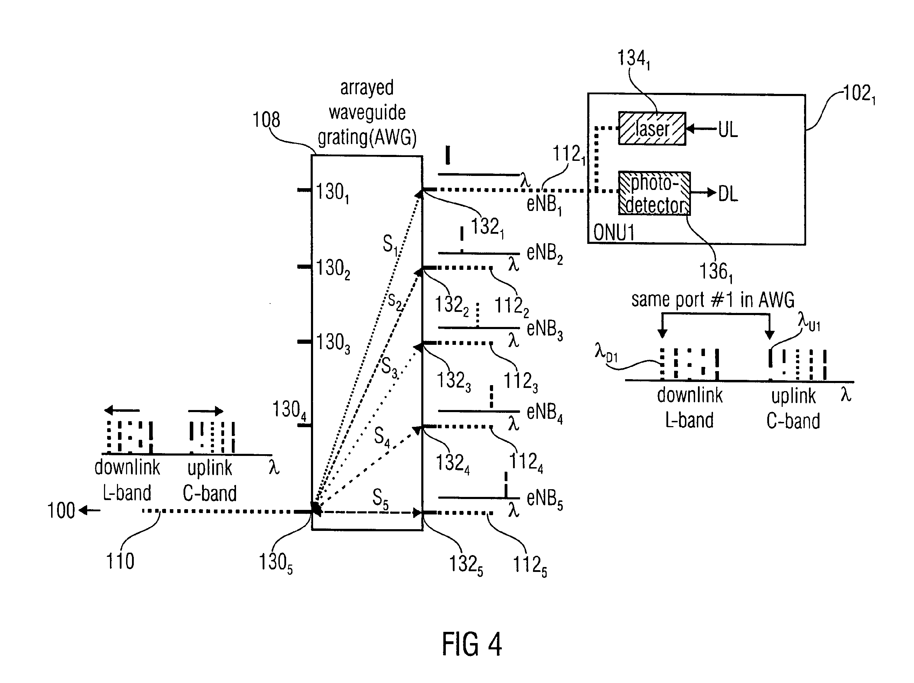

Fig. 4 shows an enlarged view of the conventional WDM-PON access network showing further details of an arrayed waveguide grating 108 and the optical network unit or base station 102_{1.} The arrayed waveguide grating 108 has a plurality of input ports 130₁ to 130₅, and a plurality of output ports 132₁ to 132₅. Of the input ports 130₁ to 130₅ only input port 130₅ is connected to the fiber 110 for connecting the arrayed waveguide grating (AWG) 108 to the optical line terminal or the central node 100 (not shown in Fig. 4). The remaining input ports 130₁ to 130₄ are not used. The output ports 132₁ to 132₅ of the AWG 108 are connected via the respective optical fibers 112₁ to 112₅ to the respective optical network units or base stations. In Fig. 4 only unit 102₁ is shown. The AWG 108 distributes the optical signals received at its input 130₅ dependent on the wavelength of the received signal to the respective output ports 132₁ to 132₅, as is indicated by the arrows indicating the respective signals S₁ to S₅ transmitted between the input port 130₅ and the respective output port 132₁ to 132₅. Between the input port and the output port a bidirectional transmission of the signals S₁ to S₅ is possible for transmitting data from the central unit 100 to the respective optical network units, and for transmitting data from one or more of the optical network units to the central unit 100. The respective optical signals have a predefined wavelength associated with each optical network unit for the downlink connection and for the uplink connection. The optical network unit further comprises a laser 134₁ that provides an output signal at the wavelength λ_{U1} that is modulated with the information to be transmitted in the uplink channel from the unit 102₁ to the central node 100. The unit 102₁ further comprises a photo detector 136₁ for detecting an optical signal at the downlink wavelength λ_{D1} associated with the optical network unit 102₁ for detecting optical signals sent from the OLT 100 to the unit 102₁ on the downlink connection.

An approach for addressing the above problems and which allows for a point-to-point communication or a broadcast communication between eNBs for realizing the X2 physical interface is described in EP Application 11150495.7-1237 and by C. Choi, Q. Wei, T. Biermann and L. Scalia, "Mobile WDM backhaul access networks with physical interbase-station links for coordinated multipoint transmission/reception systems," IEEE Globecom, Houston, TX, Dec. 2011. This approach describes a communication system including a plurality of nodes adapted to provide for a communication with one or more devices, a central node, and a passive optical network comprising a multiplexer/demultiplexer device adapted to demultiplex a first optical signal from the central node to the plurality of nodes, and to multiplex second optical signals from one or more of the nodes, each node having allocated a wavelength for generating its optical signal, wherein for directly transmitting signals from one node to at least one of the other nodes, the one node is adapted to generate a third optical signal at a wavelength allocated to the at least one of the other nodes, the third optical signal including the signal to be transmitted, and wherein the multiplexer/demultiplexer device of the passive optical network is adapted to combine the third optical signal from the one node with the first optical signal.

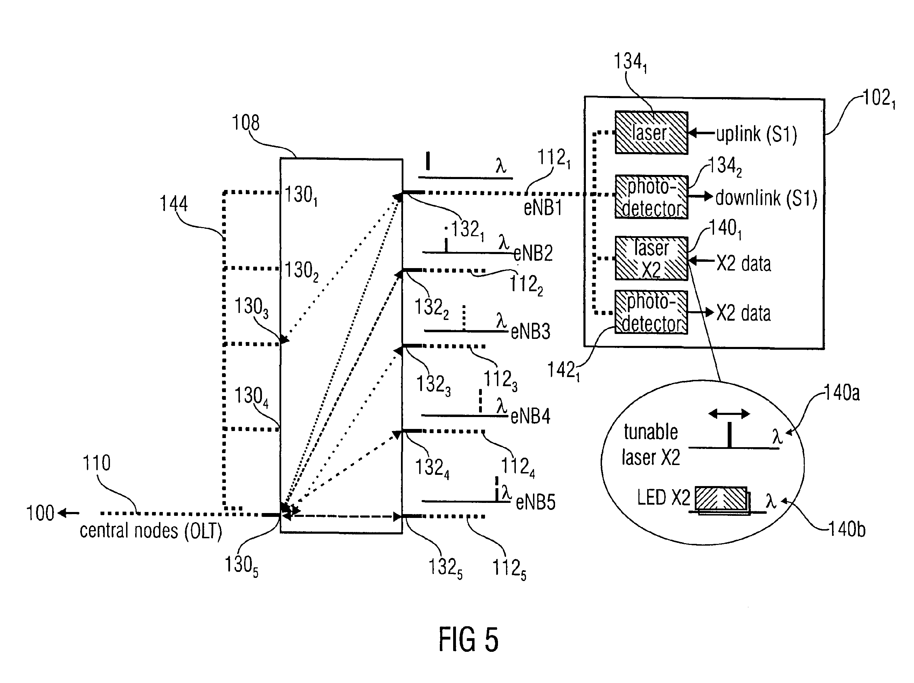

On the basis of Figs. 5 to 7 the approach of EP Application 11150495.7-1237 will be described in further detail. This approach is based on conventional WDM-PON systems described e.g. in Figs. 3(b) and 4. On the basis of this known architecture the X2 physical interface is implemented, and Fig. 5 shows a WDM-PON architecture having such a physical X2 interface. Each node is modified by providing in addition to the laser 134 and the photo detector 136 a further optical source 140₁ and a further photo detector 142₁. The source 140₁ and the photo detector 142₁ are provided for allowing transmission/reception of X2 data. The further optical source 140₁ may be formed either by a tunable laser 140a or by an LED 114b. Either the tunable laser 140a or the LED 140b may be implemented in the node 102₁. Alternatively, in case point-to-point communication and broadcasting communication is desired, the tunable laser 140a and the LED 140b may be provided in the unit 102. In addition, the arrayed waveguide grating 108 is provided with a passive optical coupler 144 for coupling signals at the ports 130₁ to 130₄ back to the input port 130₅. Thus, an additional tunable laser 140a and/or a broad spectrum optical source 140b for transmitting X2 signals is provided in combination with the passive optical coupler 144 in the arrayed waveguide grating 108 for the re-routing of the X2 signals.

For an X2 point-to-point communication the source eNB 102₁ generates a signal with a wavelength allocated to the target eNB utilizing the tunable laser 140a, modulates the X2 signals to the signal and transmits the signal through the fiber 112₁ to the port 132₁ of the AWG 108 which guides the signal e.g. to port 130₃. Because the port 130₃ of the AWG 108 is combined and applied to the main input port 130₅ via the passive optical coupler 144, the X2 optical signals generated at the source node are automatically routed to the target node, i.e. from the input port 130₅ to the port associated with the wavelength, e.g. 132_{3.} This routing is done in the passive AVG 100, so that it is not required to add any active components, thereby avoiding any increase in costs. This X2 point-to-point link transmits a large amount of data and allows a higher SNR than broadcasting. The modulation speed of the tunable laser 140a is usually higher than 2.5-Gbps.

In addition, X2 broadcasting can be implemented, i.e. broadcasting X2 data from one node to all nodes that belong to the PON system. In such a case, a broad spectrum light emitting diode LED 140b is used instead of a tunable laser source 140a. As mentioned above, both optical sources may be provided in a node, so that it can be switched between the point-to-point communication and the broadcasting communication and dependent on the selected mode either the tunable laser or the LED is used. Since LEDs are much cheaper than tunable laser sources, the co-location of a tunable laser and the LED is economically feasible. However, other examples may use only one of the optical sources dependent on the requirements in the system. The LED contains all wavelengths that are allocated to the nodes that belong to the PON system and therefore X2 signals are distributed to all nodes through the AWG 100.

This WDM-PON architecture having the physical X2 interface allows for an improved CoMP performance resulting in an improved user throughput. The CoMP technique imposes several constraints on mobile backhaul networks in terms of capacity and latency.

These constraints have to be resolved by the network architecture, particularly by providing the X2 interface, as otherwise the performance gain of the CoMP approach is limited or using the CoMP approach may even be impossible. It turned out that without a direct inter-node X2 physical link the X2 interface may not be enough to fully support all CoMP techniques, however, this approach allows X2 physical links for both point-to-point communication and broadcasting communication in WDM-based fiber-optical access networks providing a larger capacity and a better link quality than microwave wireless backhaul links that have been used conventionally for the inter-node communications. Therefore, CoMP techniques are fully supported eventually resulting in an improved user throughput. Also, additional functionality is obtained, namely X2 broadcasting, that the wireless back-hauling is not capable of so that signaling for the CoMP technique may be further reduced.

A further advantage is that the X2 physical connection is obtained with reduced construction costs. As described earlier, the microwave wireless backhaul links are conventional approaches to build X2 physical interfaces, however, in addition to the limitation that these wireless backhaul links result in a low link quality and a low capacity when compared to fiber-optical links, the main problem are the high costs for the wireless backhaul system hardware and the need for a further frequency license. The only additional components required are in the base stations, namely one or two optical sources, the laser diode and/or the LED and one additional photo detector. In addition, at the splitter 108 a further coupling element is to be provided, however, without implementing additional active elements. The additional elements needed for realizing this approach are well-known elements which can be obtained at low prices so that the system can be implemented much cheaper when compared to the system hardware costs required for the wireless backhaul X2 link. In addition, a much better quality of service than a wireless backhaul link is obtained as it exploits the benefits of the fiber-links for the X2 physical interface.

Also, this approach is highly flexible with regard to a network reconfiguration. For example, X2 links may also be used for S1-U links in case the requested data traffic for the S1 interface is too high. In this case, a tunable laser generates the wavelength allocated to it. Like the S1-interface it is transmitted from the optical network unit to the optical line terminal not disturbing the X2 interface. This additional link can provide almost the same capacity as the S1 link does, and therefore the data capacity, in an ideal case, is doubled by using such a configuration. This will result in higher network flexibility due to the capability of a link reconfiguration.

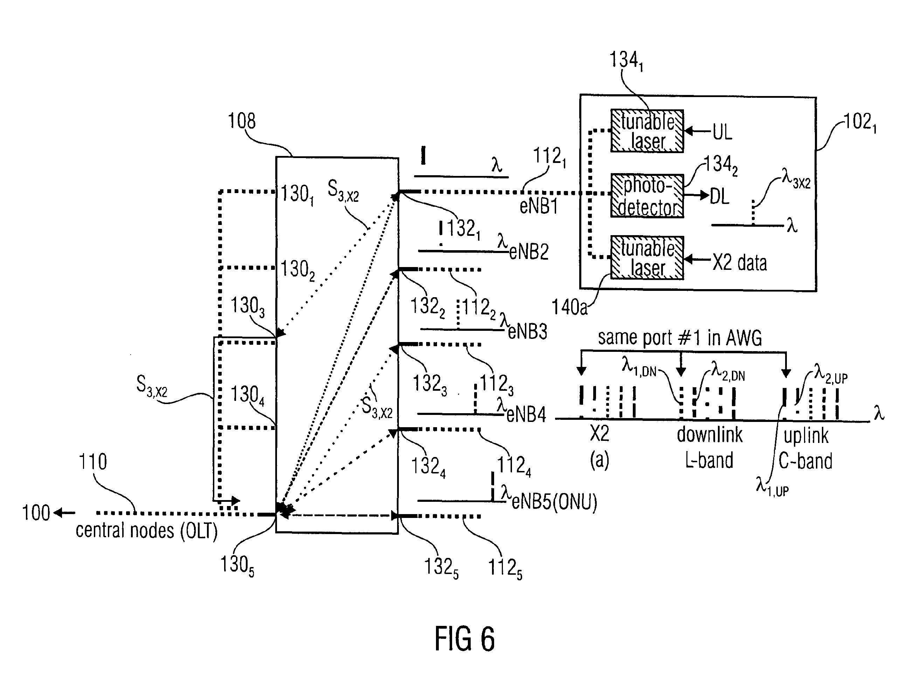

Fig. 6 shows an example comprising the WDM access network having an X2 point-to-point physical link. Fig. 6 describes details of the WDM-PON architecture providing X2 point-to-point links. The arrayed waveguide grating 108 is a fiber-coupled passive device that can separate or combine optical signals having different wavelengths. It is commonly used as an optical multiplexer/demultiplexer, also in conventional WDM-PON systems. In case of a downlink communication, optical signals with different wavelengths are demultiplexed to the different ports 132₁ to 132₅. It is assumed that λ_{1,DN} is allocated for a downlink transmission to node 102₁ (eNB1). A wavelength λ_{2,DN} is allocated to the second node eNB2, etc. For an uplink transmission different wavelengths can be used, since the AWG 108 shows a periodicity with regard to the wavelength separation. More specifically, the uplink for the node eNB1 can use a different wavelength λ_{1,UP}, separated from the downlink band by a predefined spectral range as is depicted in Fig. 6(a). The uplink wavelength λ_{1,UP} of the node eNB1 exhibits the same multiplexing characteristics as its downlink wavelength λ_{1,DN}. The laser 134₁ may be a tunable laser and may be used for the uplink transmission for generating the uplink wavelength λ_{1,UP}. The tunable laser is set to the desired wavelength and its output is modulated with the uplink data which is transmitted through the fiber link 112₁ to the grating 108. Once the tunable laser 134₁ is set to generate the uplink wavelength λ_{1,UP}, it is not changed as there is no need to do so. In accordance with other examples, a non-tunable uplink transmitter may be used.

The additional tunable laser 140₁ for providing the X2 physical interface is provided and its tunable characteristics are fully utilized in combination with the modified grating 108 having integrated the passive coupler 144. In order to avoid collisions with downlink or uplink optical signals, the X2 link uses a different band, where the grating 108 shows the same spectral characteristics. Fig. 6(a) shows the different bands for the X2 signal transmission, the downlink transmission and the uplink transmission. In case the source eNB 102₁ desires to transmit X2 data to a target, e.g. eNB3, the tunable laser 140₁ is set to generate the wavelength allocated to the target eNB. For example, for sending X2 data to the node eNB3, the tunable laser in the node 102₁ (eNB1) generates an X2 wavelength λ_{3,X2}. The data is modulated onto the signal from the laser to generate the output signal S_{3,X2}. This signal S_{3,X2} is routed in the uplink direction via optical fiber 112₁ to the port 132₁ of the AWG 108. The AWG 108 guides the signal S_{3,X2}, to the port 130₃. The integrated passive optical coupler 144 in the grating 108 delivers the signal S_{3,X2} to the main input port 130₅ of the grating 108 and then, following the AWG 108 characteristics, this signal S_{3,X2} is automatically routed via port 132₃ and fiber 112₃ to eNB3.

The nodes have the information which wavelengths are allocated to the other eNBs that belong to the same PON system. Thus, each eNB knows which wavelength has to be used to transmit X2 data to another of the eNBs. This is all done by optical processing resulting in an extremely low latency that can be achieved with the X2 interface. Also, this provides for a higher capacity of the X2 interface since the optical link is completely independent from the up/downlink capacity.

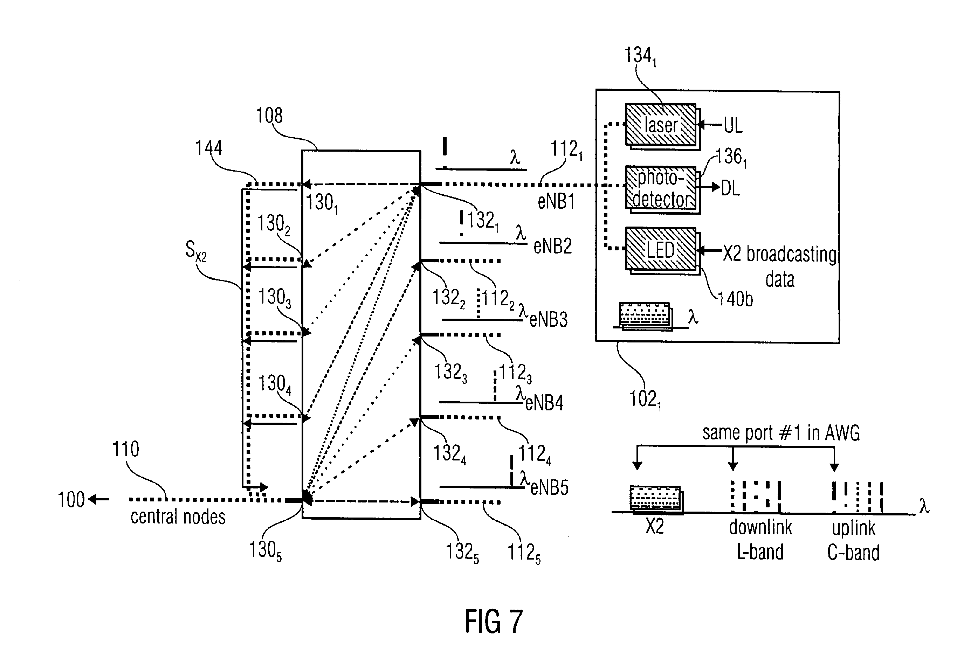

Fig. 7 shows an example for X2 broadcasting. For realizing a broadcasting X2 interface the node or base station 102₁ is provided with a broad spectrum optical source 140b instead of the narrow spectrum optical source used in Fig. 6. The broad spectrum optical source may be a LED or a S-LED instead of the tunable laser. Fig. 6 shows the WDM-PON architecture with the broadcasting links. The broad spectrum optical source 140b generates a signal containing all wavelengths allocated to all eNBs in the PON. Thus, broadcasting from one node to all other nodes can be done by modulating the X2 broadcasting data onto the output signal on the broad spectrum optical source. In the example shown in Fig. 7 eNB1 generates a broadcast signal which is send via the fiber 112₁ to the port 132₁ of the AWG 108. The AWG 108 distributes the respective signal components to the ports 130₁ to 130₄. The coupler 144 routes the signal components from the ports 130₁ to 130₄ to the input port 130₅, so that the AWG 108 distributes the signals to the respective eNBs. The broad spectrum optical sources, like LEDs, have a limited modulation speed with a maximum of several hundreds of Mbps, however, this is in general not a problem, as the broadcasting approach is used for control signaling, but not for data exchange. It is also possible to have the two functionalities of point-to-point and broadcasting combined because the broad spectrum optical sources are quite cheap.

While the above approach described in EP 11150495.7-1237 is advantageous over the other approaches described, a problem arises from the fact that it only provides for a point-to-point communication or for a broadcast communication. However, due to the nature of the tunable optical source, like the laser, used in accordance with this approach, no point-to-multipoint links are possible, i.e., it is not possible to provide for a simultaneous communication from one base station via the architecture described to a plurality of other base stations. When considering CoMP, the more base stations used for the CoMP scheme, the higher user throughput can be expected and, therefore, the mobile backhaul network needs to deliver user data to as many of the base stations as possible under the prescribed latency constraints. However, in order for a serving base station to transmit user data to multiple cooperating base stations through the above-described physical X2 link, it needs to change the wave length as many times as the number of cooperating base stations. This will take a significant amount of time and, thereby, introduce a significant latency with regard to the transmission of the required information which, in turn, limits the mobile backhaul capability for supporting CoMP. For example, changing the wavelength in a tunable laser, as described above, may be between 0.02 milliseconds and 0.5 milliseconds, depending on the implementation of the laser, so that switching to several wavelengths will take considerable time.

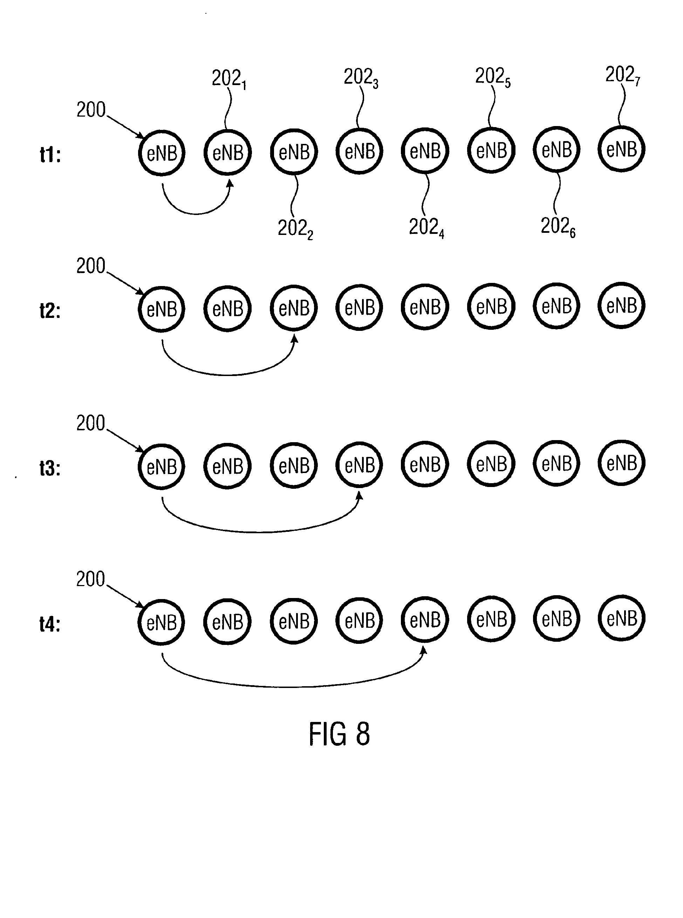

This will be described in further detail in the following with regard to Fig. 8 showing a conventional MAC protocol for a serving base station (serving eNB) to transmit user data to multiple cooperating base stations. The conventional way to transmit user data to multiple base stations through the above described physical X2 link is to send data to the base stations one after the other. Fig. 8 shows, schematically, the situation at different points in time, more specifically at times t1 to t4. In Fig. 8 the serving base station 200 is schematically represented together with a number of additional base stations 202₁ to 202₇, at least some of which are required in accordance with the selected CoMP scheme for serving a user. At first the serving base station 200 obtains information about which neighboring base stations can join CoMP. In the present case, it is assumed that among the additional base stations 202₁ to 202₇ the base stations 202₁ to 202₄ can join the CoMP. Each of the additional base stations 202₁ to 202₄ may have associated therewith a priority which may be calculated on the basis of channel feedback information obtained and collected from the user that requested the CoMP. In the example depicted in Fig. 8 it is assumed that additional base station 202₁ has the highest priority and additional base station 202₄ has the lowest priority with base stations 202₂ and 202₃ having priority levels between the highest and lowest priority level. At the time t1, the serving base station 200, in a way as described above, sets or changes its wavelengths of the tunable laser (see e.g. laser 140a in Fig. 6) in accordance with a wavelength allocated for the additional base station having the highest priority, in the depicted embodiment to the wavelength allocated to base station 202₁. Once wavelength tuning has been completed, transmission to the base station is started, and after the data transmission to the additional base station 202₁ is completed, serving base station 200 further changes its wavelength to a wavelength allocated to a base station having the next lower priority, in the present example to the wavelength allocated to the additional base station 202₂ so that transmission, at time t2 is repeated and the user data already transmitted to the first additional base station 202₁ is now transmitted to the second additional base station 202₂. This is repeated in a way as depicted in Fig. 8 until at time t4 the last additional base station 202₄ receives that user data.

While the above approach is quite simple and feasible, it requires wavelength tuning as many times as the number of base stations selected for a cooperation, in the example of Fig. 8, the serving base station 200 needs to adjust the wavelengths of the additional tunable laser (see, for example, laser 140a of Fig. 6) four times to the wavelength located with the respective additional base stations 202₁ to 202₄. This tuning introduces an additional time and thereby latency for transmitting the user data from the serving station 200 to all additional base stations 202₁ to 202₄. This becomes an even more serious problem in terms of supporting the CoMP when implementing the additional tunable laser as a low cost laser transmitter as such a transmitter, typically, has a long tuning time.

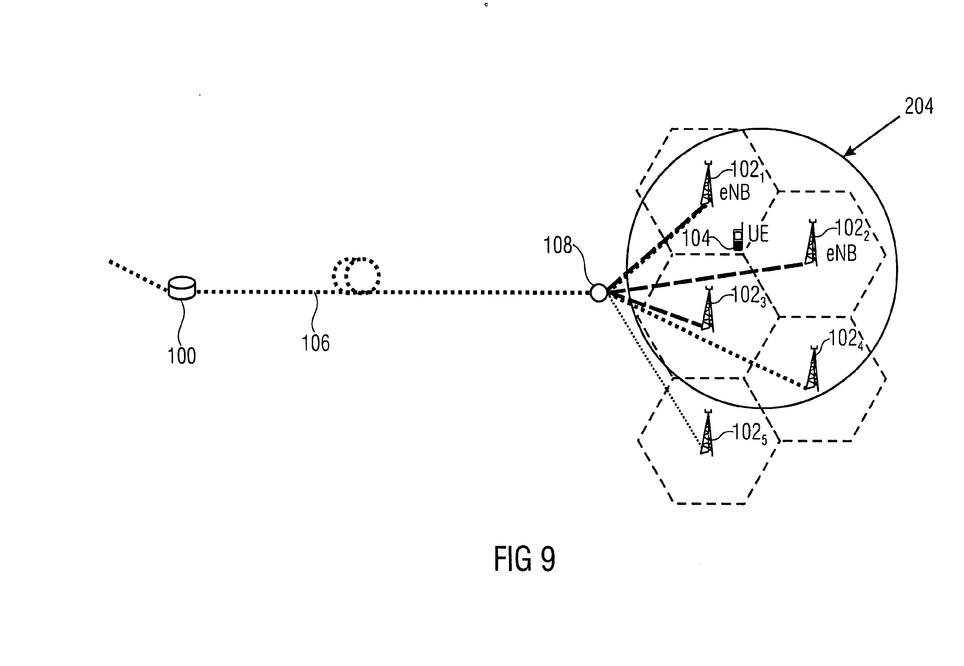

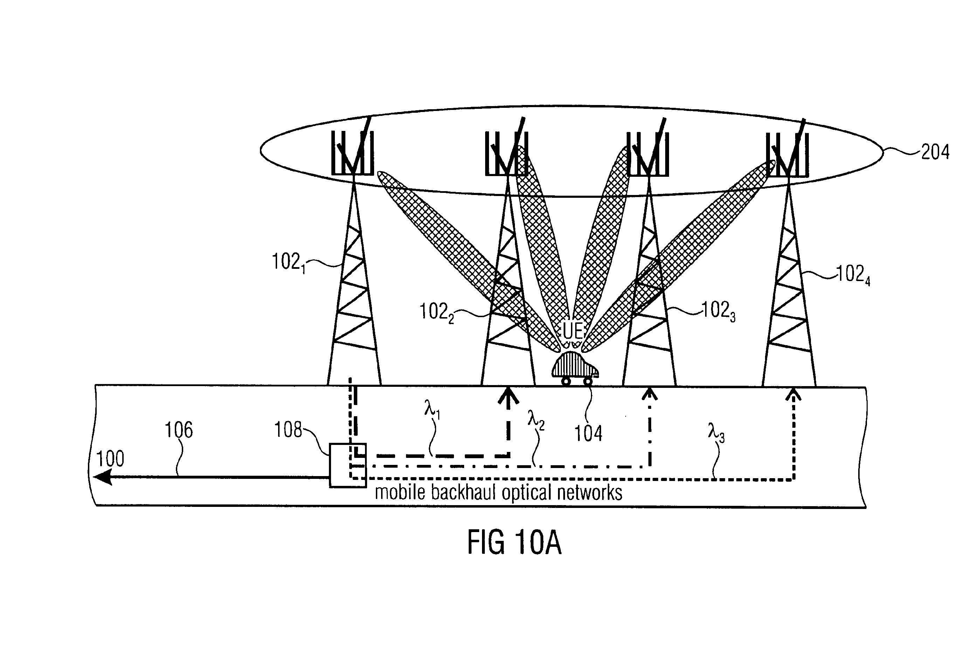

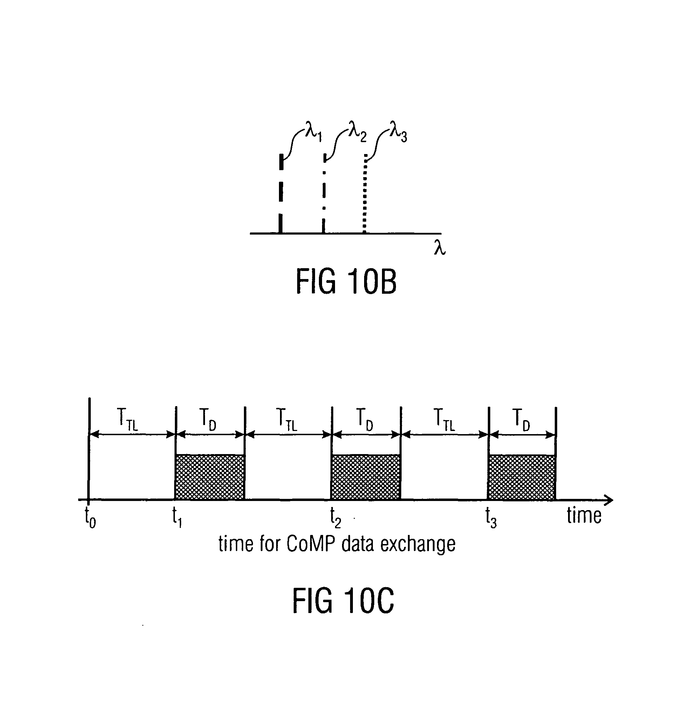

The above described problem will now be further described with regard to Figs. 9 and 10, of which Fig. 9 is a schematic representation of a CoMP cluster in a communication system, for example as described with regard to Fig. 1. As can be seen from Fig. 9, a central node or central switching node 100 is connected via the network 106 and the passive remote node 108 to a plurality of base stations 102₁, 202₅. Further, Fig. 9 shows a user 104 that, in accordance with a CoMP application is to be served by the base stations of the CoMP cluster 204. The CoMP cluster, in the depicted embodiment, comprises the base stations 102₁, 102₂, 102₃ and 102₄. It is assumed that base station 102₁ is the serving base station and that it is determined that of the remaining base stations depicted in Fig. 9, base stations 102₂ to 102₄ qualify for a CoMP application for serving the user 104. For implementing the CoMP application, for serving user equipment 104, the serving base station 102₁ needs to transmit the user data among the backhaul network to the other base stations 102₂ to 102₄ of the cluster 204 and only once all base stations received the data CoMP transmission can start. As described above, for distributing the user data among base stations 102₂ to 102₄ the serving base station 102₁ needs to carry out a point-to-multipoint transmission and the serving base station 102₁ needs to change the wavelength of its tunable laser (see above) every time it changes the destination base station. As mentioned above, changing the wavelength in the tunable laser may require a long period of time, for example the tuning time, dependent on the cost associated with the laser may be between 0.05 milliseconds and 0.2 milliseconds. However, in accordance with the CoMP specification, data exchange may need to be completed in less than 0.5 to 1 millisecond, so that when considering a more realistic situation where, for example eight base stations are used in addition to the serving base station, the total tuning time of the serving base station may be about 1.6 milliseconds when assuming a tuning time of 0.2 milliseconds resulting in too much time to complete the required exchange of data.

The above described needs to change wavelengths every time a destination is changed and will now be described in further detail with regard to Fig. 10. Fig. 10(a) shows a schematic representation of the cluster shown in Fig. 9, Fig. 10(b) shows the wavelengths used by the tunable laser 140a in the serving base station 102₁, and Fig. 10(c) shows the overall time needed for the CoMP data exchange. Once the serving base station 102₁ determines which additional base stations are part of the cluster 204, the data transmission starts and, at the time T0 the tunable laser 140a of the serving base station 102₁ is tuned to a first wavelength λ₁ allocated to the first additional base station 102₂. This tuning requires the wavelength tuning time T_{TL} indicated in Fig. 10(c). Once tuning is completed, the required data is transmitted from the serving base station 102₁ to additional base stations 102₂ which takes the data transmission time T_{D}. This transmission is completed at time t1 at which the tunable laser 104a of the serving base station 102₁ is tuned to the second wavelength λ₂ allocated to the second additional base station 102₃ which, again, requires the wavelengths tuning time T_{TL} so that data transmission from the serving base station 102₁ to the second additional base station 102₃ will only start at time t1 plus T_{TL}. This transmission requires the data transmission time T_{D}. At time t2, transmission to the second additional base station 102₃ is completed and the just described process is repeated for the third additional base station 102₄. Only once all additional base stations receive the data which needs to be shared among the base stations, the CoMP transmission to the user 104 can start.

Thus, since the above described system only allows point-to-point communication where the destination address needs to be changed by tuning the wavelength of tunable lasers, and since this wavelength tuning time is considerably long in tunable lasers, it will cause a significantly large latency to complete data exchange required in a CoMP system where one base station needs to send user data to multiple other base stations.

It is an object of the present invention to provide an improved approach for a transmission of user data, e.g. in a CoMP system, with reduced latency.

This object is achieved by a communication system of claim 1, a node of claim 13 and a method of claim 15.

Embodiments of the invention provide a communication system, comprising a plurality of nodes adapted to provide for communication with one or more devices, and a passive optical network connecting the plurality of nodes and for transmitting optical signals between the plurality of nodes, wherein for transmitting a signal from a transmitting node to a receiving node, the transmitting node is adapted to generate an optical signal at a wavelength allocated to the receiving node, the optical signal including a signal to be transmitted, and each node having allocated a different wavelength, and wherein the receiving node is adapted to transmit the signal received from the transmitting node via an optical signal having a wavelength allocated to another receiving node that did not receive the signal.

In accordance with embodiments, the signal be transmitted by the transmitting node may include information indicating to the receiving node to which other receiving node(s) the signal is to be transmitted. The receiving node, on the basis of the information, may be adapted to select the wavelength allocated with the other receiving node.

In accordance with embodiments, the signal may comprise a header and a payload section, the header comprising the information. The information may include an address of the other receiving node(s) and/or scheduling information so that one receiving node receives the signal only from one other node.

In accordance with embodiments, the transmitting node may be is configured to determine from the plurality of nodes a plurality of receiving nodes to which the signal is to be transmitted.

The communication system may be a wireless communication system and the plurality of nodes may be adapted to provide a wireless communication with one or more wireless devices, and the plurality of receiving nodes may be adapted to commonly serve a wireless device. For directly transmitting the signal from the transmitting node to the plurality of receiving nodes the transmitting node may be adapted to transmit the signal via an optical signal having a wavelength allocated to a receiving node that did not receive the signal so far, and a receiving node that received the signal, on the basis of information in the signal, may be adapted to transmit the signal via an optical signal having a wavelength allocated to another receiving node that did not receive the signal so far. The receiver node may not have received the signal in a current time frame or in any preceding time frame.

In accordance with embodiments, the communication system may include a central node, wherein the passive optical network connects the plurality of nodes and the central node and comprises a multiplexer/demultiplexer device adapted to demultiplex an optical signal received from the central node to the plurality of nodes, and to multiplex optical signals from the nodes, wherein the multiplexer/demultiplexer device is adapted to combine the optical signal from a node with the first optical signal. The optical multiplexer/demultiplexer device may comprise a first input/output port adapted to be coupled to the central node, a plurality of second input/output port adapted to be coupled to the respective nodes, and a passive optical coupler arranged between the plurality of second input/output ports and the first input/output ports, the passive optical coupler being adapted to couple one or more of the second signals received at the plurality of second input/output ports to the first input/output port.

Other embodiments of the invention provide a node adapted to be coupled via a passive optical network to a plurality of further nodes of a communication system, wherein the node has allocated a wavelength for optical signal transmission that is different from wavelengths allocated to the further nodes, wherein the node comprises an optical source adapted to generate an output signal at at least one of the wavelengths allocated to the further nodes, wherein for a transmission of a signal from the node to a plurality of the further nodes, the node being adapted to generate an optical signal at a wavelength of a further node, and wherein the optical signal includes the signal to be transmitted and information for the further node on the basis of which the further node is adapted to transmit the received signal via an optical signal having a wavelength allocated to another further node that did not receive the signal.

In accordance with embodiments, the communication system may include a central node, wherein the passive optical network the optical source may comprise a narrow spectrum optical source adapted to be tuned to one of the wavelengths allocated to the further nodes, wherein, for a point-to-point communication from the node to one of the further nodes, the node is adapted to tune the narrow spectrum optical source to the wavelength allocated to the one further node, and to generate the optical signal at the wavelength.

Embodiments of the invention provide a method for transmitting a signal from a transmitting node in a communication system to a plurality of receiving nodes in the communication system, the communication system comprising a plurality of nodes providing for a communication with one or more devices, and a passive optical network connecting the plurality of nodes and for transmitting optical signals between the plurality of nodes, the method comprising generating at the transmitting node an optical signal at the wavelength allocated to a receiver node for transmitting a signal from the transmitting node to the receiving node, the optical signal including the signal to be transmitted, and each node having allocated a different wavelength, and transmitting, by the receiving node, the signal received from the transmitting node via an optical signal having a wavelength allocated to another receiving node that did not receive the signal.

Embodiments of the invention provide a non-transitory computer program product comprising instructions stored by a machine readable carrier for carrying out the inventive method when executing the instructions on a computer.

Thus, in accordance with embodiments, rather than transmitting the data from the first or serving base station to each and every other additional base station directly, the inventive approach makes use of those additional base stations that already received the signal from the first or serving base station to further distribute the signal among the remaining additional base stations for the group (which serves the wireless device). This will significantly reduce the latency until all base stations have the necessary information for implementing the CoMP application. In other words, the inventive approach enables those additional base stations that have already received data to forward this data to other base stations which have not yet received the data whereas one base station repeats to send its data to multiple base stations one after another by changing the wavelength as described above. With this feature, it is possible to reduce the total transmission time for completing the data exchange in a CoMP application and initial evaluation results show that the inventive approach may reduce the total transmission time to at least 1/3 of the time that the conventional approach would take for distributing the data among, e.g., 16 base stations which are used for serving a wireless terminal in accordance with a CoMP scheme.

Embodiments of the invention are now described with reference to the accompanying drawings in which:
- Fig. 1: shows an example of physical and logical X2 interfaces in a mobile backhaul access network;
- Fig. 2: shows a microwave wireless backhaul link for a direct communication link between respective base stations;
- Fig. 3(a): shows a schematic representation of a time division multiplexing passive optical network (TDM-PON);
- Fig. 3(b): shows a schematic representation of a wavelength division multiplexing passive optical network (WDM-PON);
- Fig. 4: shows an enlarged view of the conventional WDM-PON access network;
- Fig. 5: shows a WDM-PON architecture having a physical X2 interface as described in EP Application 11150495.7-1237;
- Fig. 6: shows the WDM access network of Fig. 5 having an X2 point-to-point physical link;
- Fig. 7: shows an example for X2 broadcasting;
- Fig. 8: shows a conventional MAC protocol for a serving base station (serving eNB) to transmit user data to multiple cooperating base stations;
- Fig. 9: is a schematic representation of a CoMP cluster in a communication system as described with regard to Fig. 1;
- Fig. 10: shows in Fig. 10(a) a schematic representation of the cluster of Fig. 9, in Fig. 10(b) the wavelengths used by a tunable laser in the serving base station, and in Fig. 10(c) the overall time needed for the CoMP data exchange;
- Fig. 11: shows a MAC protocol comparison between embodiments of the invention and a conventional solution;
- Fig. 12: shows in Fig. 12(a) a frame structure in accordance with an embodiment of the present invention, and in Fig. 12(b) a conventional frame structure;
- Fig. 13: shows in Fig. 13(a) CoMP data signaling at a time t1 in accordance with the inventive approach, and in Fig. 13(b) CoMP data signaling at a time t1 in accordance conventional solution;
- Fig. 14: shows in Fig. 14(a) CoMP data signaling at a time t2 in accordance with the inventive approach, and in Fig. 14(b) CoMP data signaling at a time t2 in accordance conventional solution;
- Fig. 15: shows in Fig. 15(a) CoMP data signaling at a time t3 in accordance with the inventive approach, and in Fig. 15(b) CoMP data signaling at a time t3 in accordance conventional solution; and
- Fig. 16: shows a graph for the total transmission time to complete data exchange among a plurality of base stations when considering the conventional approach and the inventive approach.

Embodiments of the invention will be described in further detail below, more specifically, embodiments concerning a new transmission MAC protocol are described which employ a data forward scheme to reduce the total transmission time for CoMP data which needs to be shared among a plurality of base stations through a mobile WDM-base backhaul access network having physical X2 links.

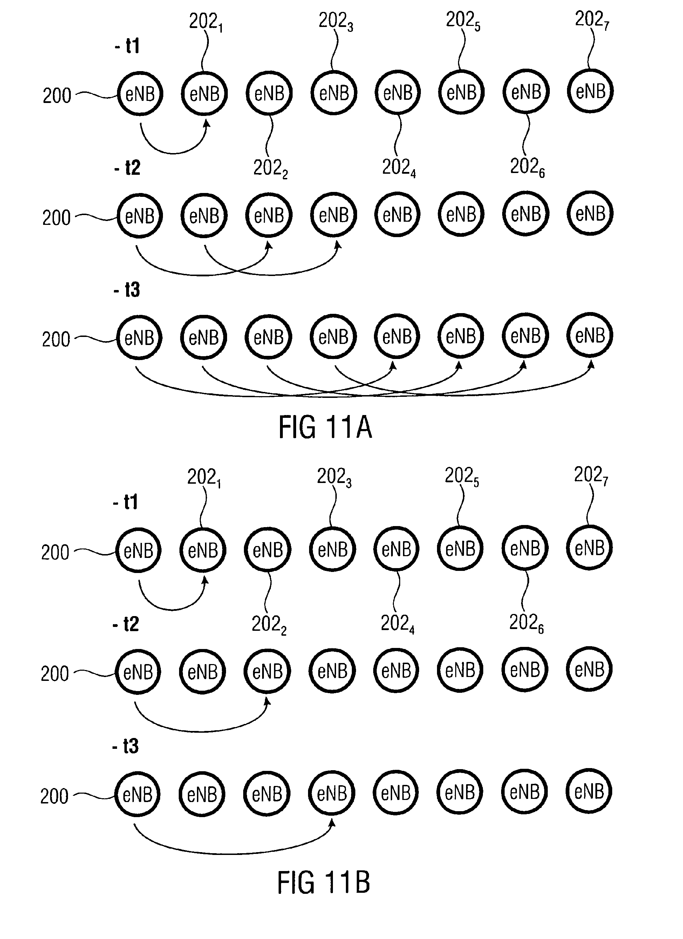

In accordance with embodiments of the invention, the receiving base stations are used as transmitting base stations to forward user data to other base stations during a next transmission time. In the conventional solution described above, only the serving base station had the function to transmit user data to other cooperating base stations. Contrary thereto, the inventive approach enables the base station that received user data at a first time to forward this user data at a second time to other cooperating base stations which have not yet received the user data. The inventive approach is described in further detail with regard to Fig. 11 showing a MAC protocol comparison between embodiments of the invention and the above described conventional solution. More specifically, Fig. 11, in a similar way as Fig. 8, depicts a serving base station and a plurality of cooperating base stations used for CoMP schematically. Fig. 11(a) shows the distribution of the user data among the cooperating base stations in accordance with the inventive approach whereas Fig. 11(b) shows the distribution of the data using the conventional approach described above with regard to Fig. 8.

In Fig. 11, the distribution of the data among the cooperating base stations at three instances of time, namely at times t1, t2 and t3, is depicted. In accordance with the inventive approach, serving base station 200, at time t1 transmits the data to the first cooperating base station 202₁. This is the same situation as in the conventional approach. However, in accordance with the inventive approach the cooperating base station 202₁ also receives information from the serving base station 200 indicating which additional cooperating base stations exist. Therefore, in accordance with the inventive approach, at t2 not only the serving base station 200 but also the first cooperating base station 202₁ transmits data, more specifically, the serving base station 200 transmits data to the second cooperating base station 202₂ while the first cooperating base station 202₁, on the basis of the additional information received from the serving base station 200, transmits the data at the same time as the serving base station 200 to the third cooperating base station 202₃. Thus, once the transmission which started at time t2 is completed, three cooperating base stations have been provided with the data whereas, in accordance with conventional approaches, only two cooperating base stations, namely base stations 202₁ and 202₂ received the user data. In accordance with the inventive approach, the first cooperating base station 202₁ forwards to the third cooperating base station 202₃ additional information about the cooperating base stations which require the data and which have not yet received the data.

On the basis of the information shared among cooperating base stations 202₁ to 202₃, in accordance with the inventive approach, at time t3 the user data is transmitted by the serving base station 200 and by the cooperating base stations 202₁ to 202₃ that received, at that time, already the user data together with the additional information to which the data is further to be distributed. This allows, at time t3 to transmit the user data from serving node 200 to the fourth cooperating node 202₄ that did not yet receive any data, to transmit the data from the first cooperating node 202₁ to the fifth cooperating node 202₅, to transmit the data from the second cooperating node 202₂ to the sixth cooperating node 202₆ and to transmit the data from the third cooperating node 202₃ to the seventh cooperating node 202₇.

Assuming that the CoMP cluster comprises the serving station 200 and the cooperating station 202₁ to 202₇, after time t3 all data is shared among the cooperating base stations in accordance with the inventive approach whereas a comparison with the conventional approach shows that at the same time, in accordance with the conventional approach, only half the base stations which need the data actually received it. It can be seen that the inventive scheme allows all cooperating base stations to get the user data at time t3, while the conventional solution would complete the data exchange only at time t7, so that in accordance with the inventive approach the total transmission time can be reduced. It is noted that this scheme can be used also the other way around, i.e., when considering a multipoint-to-point transmission.

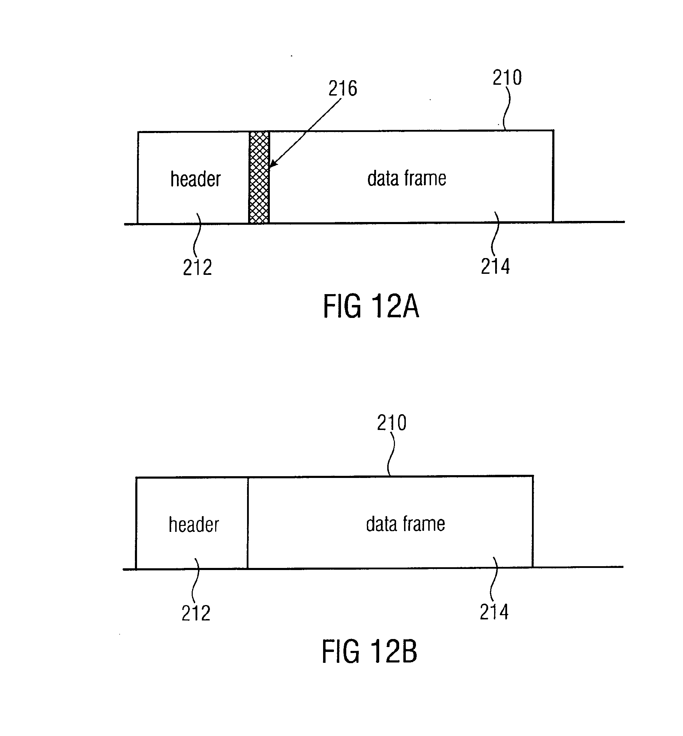

Thus, the inventive data forwarding scheme allows reducing the total transmission time in a PON network as described above. Additional information is forwarded among the base stations so that a receiving base station has knowledge about other base stations to which the data it received should be forwarded. This information may, for example, be included into a header of the frame transmitted among the base stations. This is depicted in Fig. 12 showing in Fig. 12(a) a frame structure in accordance with an embodiment of the present invention and in which Fig. 12(b) shows a conventional frame structure. As shown in Fig. 12(b) the conventional frame 210 comprises a header 212 and the data frame 214 holding the payload. In accordance with the inventive approach, as shown in Fig. 12(a), the frame 210, in addition, comprises forwarding address bits or other scheduling information 216 indicating to the receiving base station those additional cooperating base stations to which it shall transmit the data received via the frame.

For example, when considering the approach described with regard to Fig. 11(a), once the serving base station 200 has knowledge about the cooperating base stations forming the cluster, for example knowledge that base stations 202₁ to 202₇ of a plurality of base stations are the cooperating base stations, transmission of the data can be appropriately scheduled. More specifically, knowing at the base station 200 that seven additional cooperating base stations need to be served, the serving base station 200 knows that at the first time, the first of the cooperating base stations 202_{1,} for example the base station having the highest assigned priority, receives the data frame. On the basis of the scheduling determined in the base station 200 in addition to the data frame also the address information is forwarded to the first cooperating base station 202₁ informing this base station that in subsequent time frames the data received is also to be forwarded to cooperating base station 202₃ and cooperating base station 202₅. Further, the cooperating base station 202₁ transmits together with the data also scheduling information to the further cooperating base stations so that these base stations have knowledge about additional possible base stations to which their data is to be further forwarded. In the embodiments shown in Fig. 11 cooperating base station 202₃ receives from cooperating base station 202₁ the additional scheduling information or address information so that in the next time frame it needs to forward the received data to the cooperating base station 202₇. In a similar way, at time frame t2 the base station 200 provides the additional scheduling information to the cooperating base station 202₂ which, again, shares it with the remaining cooperating base stations to which it forwards its data.

As far as Fig. 11 is concerned, it is noted that the order in which the transmission from the serving base station to the cooperating base station is depicted is just an example, for example dependent on the priority of the cooperating base stations the serving base station 200 may first forward the data to another of the cooperating base stations, for example cooperating base station 202₇ which may then, on the basis of the scheduling information, select one of the remaining cooperating base stations to which is transfers the data.

The inventive approach is advantageous as it allows reducing the total time for base stations to complete the data exchange for CoMP. As mentioned above, CoMP has strict requirements with regard to the latency. All data and control information exchange among base stations which are supposed to join CoMP needs to be done within certain latency requirements. In accordance with the inventive approach, the total transmission time for the data and the control information exchange in the physical X2 link can be reduced, thereby reducing the latency which is clearly advantageous for mobile services, like VoIP and for the mobile network operation. In addition, it is possible to enlarge the CoMP cluster resulting in an improved cell throughput. More specifically, with reduced transmission time for data exchange, enlarged CoMP clusters become possible because the inventive approach allows more base stations to exchange data through the physical x2 link under the latency requirement of CoMP so that when considering the CoMP design, the more base stations are in the cluster the higher cell throughput can be expected.

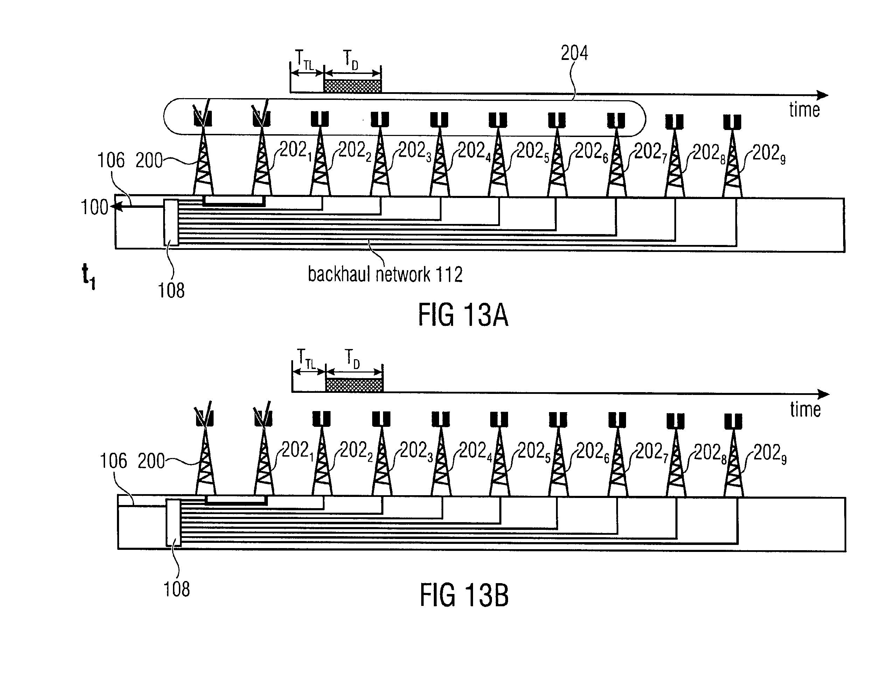

With regard to Figs. 13 to 15, the inventive approach will be described in further detail on the basis of a comparison with conventional solutions. In Figs. 13 to 15 the data information using a physical X2 interface at different times t1, t2 and t3 are depicted, wherein Figs. 13(a) to 15(a) depict the inventive approach and Figs. 13(b) to 15(b) depict a conventional approach. As shown in Fig. 13(a) it is assumed that besides serving base station 200 a plurality of further base stations 202₁ to 202₉ are given. Serving base station 200, i.e., the base station that serves the user 104, first decides which of the neighboring base stations are able to join CoMP, i.e., the so-called clustering is done. Only for the neighboring base stations being part of the cluster, the so-called cooperating base stations, there is a need to send the user data within the latency requirements for the CoMP application. In the embodiment depicted in Figs. 13 to 15 it is assumed that the cluster comprises the serving base station and cooperating base stations 202₁ to 202₇ forming the cluster 204. As described above, the plurality of cooperating base stations 202₁ to 202₇ may have associated therewith respective priority values on the basis of which the order is determined in which the data is transmitted from the serving base station 200 to the remaining cooperating base stations. At time t1 the serving base station 200 tunes the wavelengths of the tunable laser 140a (see Fig. 6) to a wavelength allocated to cooperating base station 202₁ so that after the tuning time T_{TL} data transmission from the serving base station 200 to the first cooperating base station 202₁ of the cluster 204 occurs during the data transmission time T_{D}. At time t1 the situation is the same in the conventional approach.

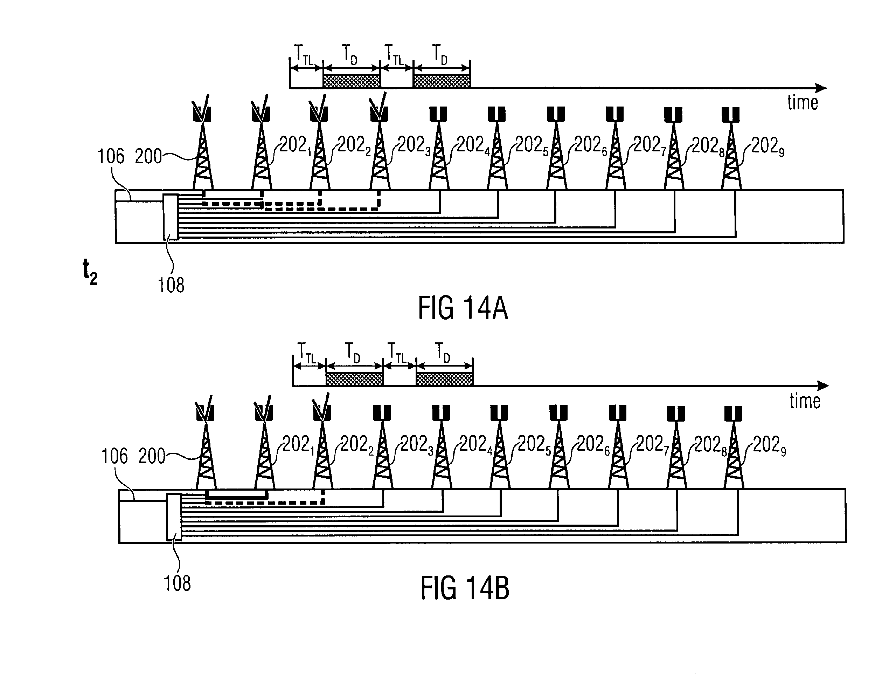

However, as described above, other than in the conventional approach, in accordance with the inventive approach, the first cooperating base station 202₁ not only received the user data to be shared among the base stations of the cluster 204 but also additional scheduling information from the serving base station 200 indicating that the received user data should be forwarded to a third priority base station, namely cooperating base station 202₃ and also to the fifth priority base station, namely cooperating base station 202₅. On the basis of this information, at time frame t2 (see Fig. 14) the serving base station 200 and the first cooperating base station 202₁ tune their respective tunable lasers to the wavelength allocated with the second priority base station 202₂ and to the third priority base station 202₃ so that after the tuning time T_{TL} the data is transmitted from the serving base station 200 to the second priority base station 202₂ and from the first priority base station 202₁ to the third priority base station 202₂, as shown in Fig. 14(a).

As can be seen from Fig. 14(b) at this time t2, in the conventional approach, only the second priority base station 202₂ has received its data from the serving base station 200. In accordance with the inventive approach, in addition to the data, also the above discussed scheduling information is forwarded to the second and third priority base stations 202₂ and 202₃ so that these base stations can also determine those additional base stations which they should transfer the received data to.

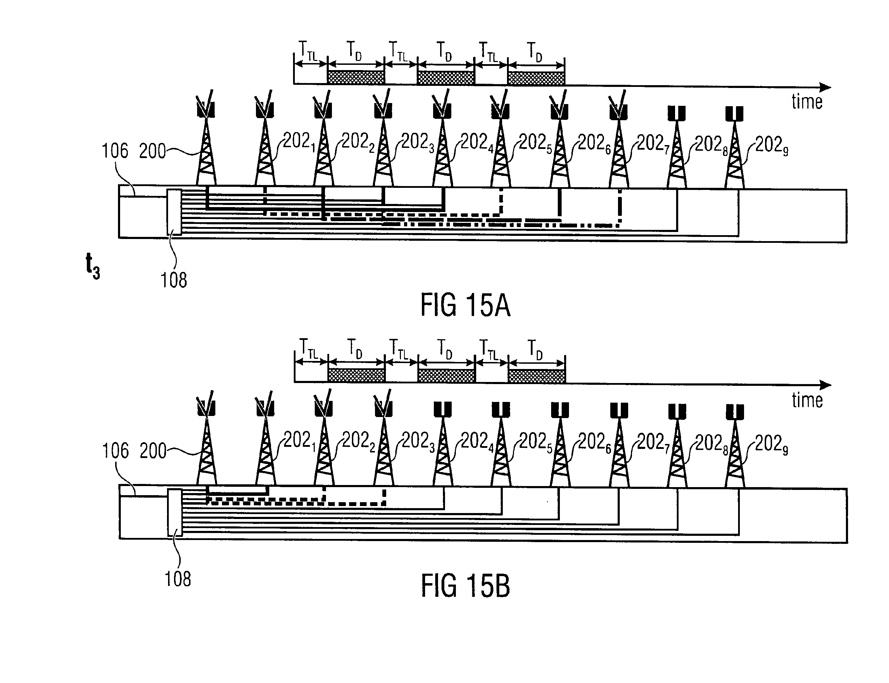

Once data transmission is completed, at time t3 serving base station 200 and cooperating base stations 202₁ to 202₃ tune their tunable lasers to the respective cooperating base stations to which they intend to forward the data. More specifically, serving base station 200 tunes its laser to the wavelengths of the fourth priority base station 202₄, first cooperating base station 202₁ tunes its laser to the wavelength allocated to the fifth priority base station 202₅, second priority base station 202₂ tunes its laser to the wavelengths allocated with the sixth priority base station 202₆, and the third priority base station 202₃ tunes its laser to the wavelength allocated to the seventh priority base station 202₇. After the tuning time T_{TL} all base stations 200 and 202₁ to 202₃ transmit the user data to the respective cooperating base stations 202₄ to 202₇ so that, at the end of time frame t3, all base stations in the cluster 204 already received the user data whereas, as can be seen from Figs. 15(b) at the same time, in the conventional approach, only cooperating base stations 202₁ to 202₃ received the data.

Thus, the number of base stations that have received data increases exponentially and, as mentioned, at the third time slot, in accordance with the inventive approach, all eight base stations of the cluster received the data while in the conventional approach only four of the base stations of the cluster would have received the data. This difference gets larger as the number of cooperating base stations increases.

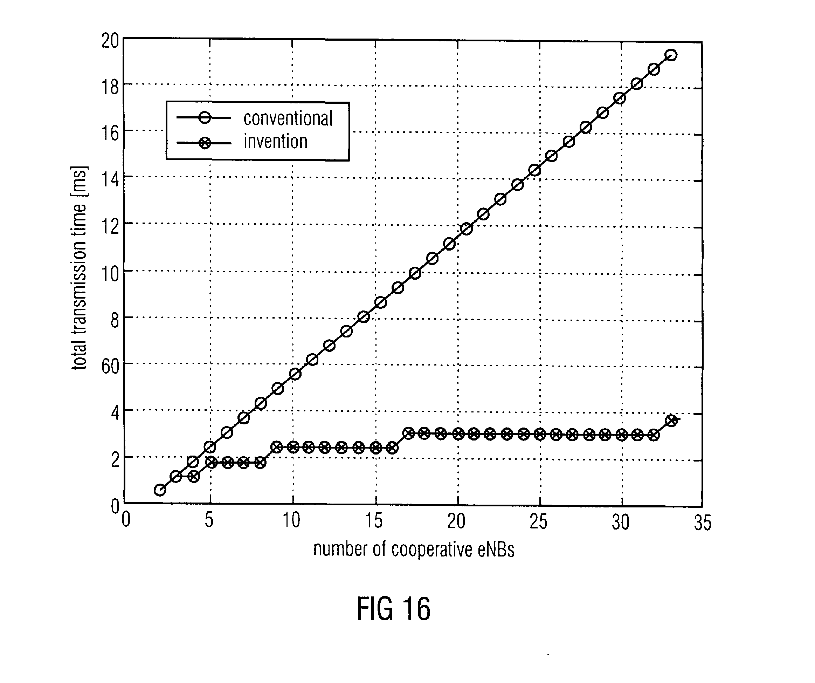

Fig. 16 shows the total transmission time to complete data exchange among a plurality of base stations when considering the conventional approach and the inventive approach. Fig. 16 shows the initial evaluation results for the total time required to complete transmission in accordance with the inventive approach and in accordance with the conventional solution. For this evaluation, the tuning time of the tunable lasers of the base stations has been assumed to be 0.1 millisecond and the data transmission time slot has been assumed to have a length of 0.5 milliseconds. It can be seen that the time to complete the transmission is linearly proportional to the number of cooperating base stations in the conventional approach while, on the other hand, it is logarithmically proportional to the number of cooperating base stations in accordance with the inventive approach. In accordance with the inventive solution, the time to complete transmission can be reduced to less than one third of the conventional approach when considering a cluster of, e.g., 16 cooperating base stations.

While the above embodiments have been described in the context of a point-to-multipoint transmission, it is noted that the inventive approach can also be applied to a multipoint-to-point transmission which is required for the CoMP uplink case. In this situation, the cooperating base stations first transmit the uplink data to other cooperating base stations such that only one base station receives data from another base station. Afterwards, the base stations that received data from other base stations forward the received data, in addition to their own data, if needed, to other base stations.

While the above embodiments have been described in the context of a CoMP system, it is noted that the inventive approach can also be applied in other approaches requiring the transfer of information among a plurality of nodes or base stations using a point-to-multipoint transmission or a multipoint-to-point transmission.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer. A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A communication system, comprising:
a plurality of nodes (200, 202₁-202₉) adapted to provide for communication with one or more devices (104); and
a passive optical network (106, 112) connecting the plurality of nodes (200, 202₁-202₉) and for transmitting optical signals between the plurality of nodes (200, 202₁-202₉),
wherein for transmitting a signal from a transmitting node (200) to a receiving node (202₁-202₉), the transmitting node (200) is adapted to generate an optical signal at a wavelength allocated to the receiving node (202₁-202₉), the optical signal including a signal to be transmitted, and each node (200, 202₁-202₉) having allocated a different wavelength, and
wherein the receiving node (202₁-202₉) is adapted to transmit the signal received from the transmitting node (200) via an optical signal having a wavelength allocated to another receiving node (200, 202₁-202₉) that did not receive the signal.

2. The communication system of claim 1, wherein the signal transmitted by the transmitting node (200) includes information (216) indicating to the receiving node (202₁-202₉) to which other receiving node(s) the signal is to be transmitted.

3. The communication system of claim 2, wherein the receiving node (202₁-202₉), on the basis of the information, is adapted to select the wavelength allocated with the other receiving node.

4. The communication system of claim 2 or 3, wherein the signal comprises a header (212) and a payload section (214), the header (212) comprising the information (216).

5. The communication system of one of claims 2 to 4, wherein the information (216) includes an address of the other receiving node(s) (202₁-202₉).

6. The communication system of one of claims 2 to 5, wherein the information (216) includes scheduling information so that one receiving node (202₁-202₉) receives the signal only from one other node (200, 202₁-202₉).

7. The communication system of one of claims 1 to 6, wherein the transmitting node (200) is configured to determine from the plurality of nodes (200, 202₁-202₉) a plurality of receiving nodes (202₁-202₉) to which the signal is to be transmitted.

8. The communication system of claim 7, wherein the communication system is a wireless communication system and the plurality of nodes (200, 202₁-202₉) are adapted to provide a wireless communication with one or more wireless devices (104), and the transmitting node (200) and the plurality of receiving nodes (202₁-202₉) are adapted to commonly serve a wireless device (104).

9. The communication system of claim 7 or 8, wherein, for directly transmitting the signal from the transmitting node (200) to the plurality of receiving nodes (202₁-202₉)
- the transmitting node (200) is adapted to transmit the signal via an optical signal having a wavelength allocated to a receiving node (202₁-202₉) that did not receive the signal so far, and
- a receiving node (202₁-202₉) that received the signal, on the basis of information in the signal, is adapted to transmit the signal via an optical signal having a wavelength allocated to another receiving node that did not receive the signal so far.

10. The communication system of one of claims 1 to 9, comprising:
a central node (100);
wherein the passive optical network (106, 112) connects the plurality of nodes (200, 202₁-202₉) and the central node (100) and comprises a multiplexer/demultiplexer device (108) adapted to demultiplex an optical signal received from the central node (100) to the plurality of nodes (200, 202₁-202₉), and to multiplex optical signals from the nodes (200, 202₁-202₉), wherein the multiplexer/demultiplexer device (108) is adapted to combine the optical signal from a node (200, 202₁-202₉) with the first optical signal.

11. A node adapted to be coupled via a passive optical network to a plurality of further nodes of a communication system,
wherein the node (200) has allocated a wavelength for optical signal transmission that is different from wavelengths allocated to the further nodes (202₁-202₉),
wherein the node (200) comprises an optical source (140₁) adapted to generate an output signal at at least one of the wavelengths allocated to the further nodes (202₁-202₉),
wherein for a transmission of a signal from the node (200) to a plurality of the further nodes (202₁-202₉), the node (200) being adapted to generate an optical signal at a wavelength of a further node (202₁-202₉), and
wherein the optical signal includes the signal to be transmitted and information for the further node (202₁-202₉) on the basis of which the further node (202₁-202₉) is adapted to transmit the received signal via an optical signal having a wavelength allocated to another further node that did not receive the signal.

12. The node of claim 11, wherein the optical source comprises a narrow spectrum optical source (140₁) adapted to be tuned to one of the wavelengths allocated to the further nodes (202₁-202₉), and wherein, for a point-to-point communication from the node (200) to one of the further nodes (202₁-202₉), the node (200) is adapted to tune the narrow spectrum optical source (140₁) to the wavelength allocated to the one further node, and to generate the optical signal at the wavelength.

13. A method for transmitting a signal from a transmitting node (200) in a communication system to a plurality of receiving nodes (202₁-202₉) in the communication system, the communication system comprising a plurality of nodes (200, 202₁-202₉) providing for a communication with one or more devices (104), and a passive optical network (106, 112) connecting the plurality of nodes (200, 202₁-202₉) and for transmitting optical signals between the plurality of nodes (200, 202₁-202₉), the method comprising:
generating at the transmitting node (200) an optical signal at the wavelength allocated to a receiver node (202₁-202₉) for transmitting a signal from the transmitting node (200) to the receiving node (202₁-202₉), the optical signal including the signal to be transmitted, and each node having allocated a different wavelength, and transmitting, by the receiving node (202₁-202₉), the signal received from the transmitting node (200) via an optical signal having a wavelength allocated to another receiving node that did not receive the signal.

14. A non-transitory computer program product comprising instructions stored by a machine readable carrier for carrying out the method of claim 13 when executing the instructions on a computer.

## Amended claims

### Amended claims in accordance with Rule 137(2) EPC.

**1.** A communication system, comprising:
a plurality of nodes (200, 202₁-202₉) adapted to provide for communication with one or more devices (104); and
a passive optical network (106, 112) connecting the plurality of nodes (200, 202₁-202₉) and for transmitting optical signals between the plurality of nodes (200, 202₁-202₉), the passive optical network (106, 112) comprising a plurality of optical network units, the plurality of optical network units comprising the plurality of nodes (200, 202₁-202₉),
wherein for transmitting a signal from a transmitting node (200) to a receiving node (202₁), the transmitting node (200) is adapted to generate an optical signal at a wavelength allocated to the receiving node (202₁), the optical signal including a signal to be transmitted, and each node (200, 202₁-202₉) having allocated a different wavelength,
**characterized in that**
the receiving node (202₁) is adapted to transmit the signal received from the transmitting node (200) via an optical signal having a wavelength allocated to another receiving node (202₃) that did not receive the signal.

**2.** The communication system of claim 1, wherein the signal transmitted by the transmitting node (200) includes information (216) indicating to the receiving node (202₁) to which other receiving node(s) the signal is to be transmitted.

**3.** The communication system of claim 2, wherein the receiving node (202₁), on the basis of the information, is adapted to select the wavelength allocated with the other receiving node (202₃).

**4.** The communication system of claim 2 or 3, wherein the signal comprises a header (212) and a payload section (214), the header (212) comprising the information (216).

**5.** The communication system of one of claims 2 to 4, wherein the information (216) includes an address of the other receiving node(s) (202₃).

**6.** The communication system of one of claims 2 to 5, wherein the information (216) includes scheduling information so that one receiving node (202₁-202₉) receives the signal only from one other node (200, 202₁-202₉).

**7.** The communication system of one of claims 1 to 6, wherein the transmitting node (200) is configured to determine from the plurality of nodes (200, 202₁-202₉) a plurality of receiving nodes (202₁-202₉) to which the signal is to be transmitted.

**8.** The communication system of claim 7, wherein the communication system is a wireless communication system and the plurality of nodes (200, 202₁-202₉) are adapted to provide a wireless communication with one or more wireless devices (104), and the transmitting node (200) and the plurality of receiving nodes (202₁-202₉) are adapted to commonly serve a wireless device (104).

**9.** The communication system of claim 7 or 8, wherein, for directly transmitting the signal from the transmitting node (200) to the plurality of receiving nodes (202₁-202₉)
- the transmitting node (200) is adapted to transmit the signal via an optical signal having a wavelength allocated to a receiving node (202₁) that did not receive the signal so far, and
- a receiving node (202₁) that received the signal, on the basis of information in the signal, is adapted to transmit the signal via an optical signal having a wavelength allocated to another receiving node (202₃) that did not receive the signal so far.

**10.** The communication system of one of claims 1 to 9, comprising:
a central node (100);
wherein the passive optical network (106, 112) connects the plurality of nodes (200, 202₁-202₉) and the central node (100) and comprises a multiplexer/demultiplexer device (108) adapted to demultiplex an optical signal received from the central node (100) to the plurality of nodes (200, 202₁-202₉), and to multiplex optical signals from the nodes (200, 202₁-202₉), wherein the multiplexer/demultiplexer device (108) is adapted to combine the optical signal from a node (200, 202₁-202₉) with the received optical signal.

**11.** A node adapted to be coupled via a passive optical network to a plurality of further nodes of a communication system, the passive optical network (106, 112) comprising a plurality of optical network units, the plurality of optical network units comprising the node and the further nodes (200, 202₁-202₉),
wherein the node (200) has allocated a wavelength for optical signal transmission that is different from wavelengths allocated to the further nodes (202₁-202₉),
wherein the node (200) comprises an optical source (140₁) adapted to generate an output signal at at least one of the wavelengths allocated to the further nodes (202₁-202₉), and
wherein for a transmission of a signal from the node (200) to a plurality of the further nodes (202₁-202₉), the node (200) being adapted to generate an optical signal at a wavelength of a further node (202₁-202₉),
**characterized in that**
the optical signal includes the signal to be transmitted and information for the further node (202₁-202₉) on the basis of which the further node (202₁-202₉) is adapted to transmit the received signal via an optical signal having a wavelength allocated to another further node that did not receive the signal.

**12.** The node of claim 11, wherein the optical source comprises a narrow spectrum optical source (140₁) adapted to be tuned to one of the wavelengths allocated to the further nodes (202₁-202₉), and wherein, for a point-to-point communication from the node (200) to one of the further nodes (202₁-202₉), the node (200) is adapted to tune the narrow spectrum optical source (140₁) to the wavelength allocated to the one further node, and to generate the optical signal at the wavelength.

**13.** A method for transmitting a signal from a transmitting node (200) in a communication system to a plurality of receiving nodes (202₁-202₉) in the communication system, the communication system comprising a plurality of nodes (200, 202₁-202₉) providing for a communication with one or more devices (104), and a passive optical network (106, 112) connecting the plurality of nodes (200, (202₁-202₉) and for transmitting optical signals between the plurality of nodes (200, 202₁-202₉), the passive optical network (106, 112) comprising a plurality of optical network units, the plurality of optical network units comprising the plurality of nodes (200, 202₁-202₉), the method comprising:
generating at the transmitting node (200) an optical signal at the wavelength allocated to a receiving node (202₁) for transmitting a signal from the transmitting node (200) to the receiving node (202₁), the optical signal including the signal to be transmitted, and each node having allocated a different wavelength,
**characterized by**
transmitting, by the receiving node (202₁), the signal received from the transmitting node (200) via an optical signal having a wavelength allocated to another receiving node (202₃) that did not receive the signal.

**14.** A non-transitory computer program product comprising instructions stored by a machine readable carrier for carrying out the method of claim 13 when executing the instructions on a computer.
